# FASCICULE DE BREVET EUROPEEN

(11) **EP 0 354 873 B1**
(45) Date de publication et mention de la délivrance du brevet: **24.03.1993**
(21) Numéro de dépôt: 89810579.6
(22) Date de dépôt: 28.07.1989
(51) Int. Cl.: B65G 59/02

(54) **Dépalettiseur pour paquets d'étiquettes**
Entpalettierer für Etikettenbündel
Depalletizer for parcels of labels

(30) Priorité: 10.08.1988 CH 3014/88
(43) Date de publication de la demande: 14.02.1990
(73) Titulaire: FABRIQUES DE TABAC REUNIES S.A., 2003 Neuchâtel-Serrières (CH)
(72) Inventeur: Berger, Maurice, CH-2016 Cortaillod (CH); Cestonaro, Jean, CH-2074 Marin (CH)
(74) Mandataire: Fischer, Franz Josef

(56) Documents cités:
- EP-A- 0 071 864
- AT-B- 377 465
- DE-A- 3 514 487
- US-A- 3 967 737
- US-A- 3 974 922

## Description

La présente invention a pour objet un appareil dépalettiseur automatique, capable de déplacer des objets, en particulier des piles d'étiquettes disposées en couches superposées et formées de rangées parallèles et adjacentes, sur une palette, et de les amener un à un dans une station d'entrée d'une machine, comportant des moyens élévateurs pour élever la palette pas à pas et amener les couches à une hauteur prédéterminée Za, des moyens de transfert mobiles dans une direction horizontale X, un transporteur d'évacuation également mobile dans la dite direction X et des moyens de distribution des objets dans la dite station d'entrée.

Le problème, consistant à dépalettiser automatiquement un chargement d'objets disposés sur une palette, se pose dans de nombreuses opérations de manutention et notamment dans l'industrie des cigarettes avec l'alimentation des empaqueteuses. On sait que les machines à empaqueter sont alimentées, d'une part, par les cigarettes et, d'autre part, par les éléments constituant leur emballage, c'est-à-dire des feuilles d'aluminium et des feuilles que l'on appelle étiquettes. L'étiquette est une feuille de carton qui est préalablement découpée et marquée, de façon à pouvoir être repliée, rabattue et fermée dans l'empaqueteuse pour constituer l'emballage du paquet de cigarettes. Les étiquettes sont livrées sous forme d'empilage de feuilles plates comportant chacun, par exemple, 250 pièces, et ces empilages, qui constituent les objets dont il sera question dans le cours de la présente description, sont livrés sur des palettes standard, disposés en couches superposées de rangées de paquets alignés selon des directions Y et X. Entre chaque couche est disposée une feuille intercalaire de carton qui a les mêmes dimensions que l'agencement des rangées d'empilage sur la palette et ces feuilles intercalaires doivent être éliminées chaque fois qu'une couche d'empilage d'étiquettes a été entièrement enlevée.

Jusqu'à maintenant, il n'a pas été possible de concevoir et réaliser un appareil qui soit susceptible de prendre en charge une palette pleine et d'amener un à un, d'une manière entièrement automatique, avec la précision requise, chacun des empilages d'étiquettes posés sur cette palette dans la station d'entrée d'une empaqueteuse, de sorte que l'alimentation des empaqueteuses devait se faire à la main. Or, cette opération manuelle représente un travail fastidieux et qui immobilise le personnel d'une façon d'autant plus gênante que le rythme de travail des empaqueteuses croît sans cesse, de sorte que l'alimentation des empaqueteuses en paquets d'étiquettes est une opération qui doit s'effectuer avec fiabilité d'une façon absolument constante et rapidement.

On connaît, par le document de brevet US-A-3 967 737 un dépalettiseur du type mentionné au début. Il comporte une pluralité de chariots mobiles, portant chacun des moyens de transfert, un transporteur d'évacuation et un transporteur secondaire transportant les objets dans une direction perpendiculaire à celle du transporteur d'évacuation. A chaque chariot sont associés des moyens de transfert qui comportent une pince et qui sont capables de saisir par serrage horizontal une lignée d'objets disposés suivant la direction de déplacement du transporteur d'évacuation.

Une telle disposition ne facilite pas la distribution des objets un à un à la station d'entrée de la machine suivante. En outre, elle ne serait pas applicable à des objets qui tels les paquets d'étiquettes sont formés d'éléments superposés, liés en un ensemble par le seul fait de leur poids. Le document US-3 974 922 a également pour objet un dépalettiseur permettant de décharger automatiquement des récipients disposés en lignées et rangées, par couches superposées, sur une palette qui se déplace verticalement sur un élévateur. Cette installation souffre du même défaut que celle mentionnée auparavant.

Le document DE-A-3 514 487 décrit une installation qui distribue à une machine des empilages formés de feuilles de papier ondulé. Le format des feuilles est rectangulaire, et chaque pile a une longueur qui couvre toute la largeur de la machine. Les piles sont serrées latéralement puis partiellement soulevées d'un côté de manière à permettre l'introduction d'un bras de support latéralement sous l'empilage. Cet appareillage est compliqué et ne s'appliquerait pas non plus à la dépalettisation de paquets d'étiquettes.

La présente invention est donc le fruit d'une recherche d'un appareil entièrement automatique, effectuant toutes les manipulations nécessaires sur des paquets d'étiquettes, à partir des palettes qui transportent ces paquets.

L'appareil selon l'invention est caractérisé par les caractéristiques définies dans la seconde partie de la revendication 1.

On va décrire ci-après, à titre d'exemple, une forme d'exécution de l'objet de l'invention, ainsi que les différentes variantes possibles de cet appareil, et cela en se référant aux dessins annexés dont:
la fig. 1 est une vue en perspective schématique et simplifiée montrant les éléments principaux de l'appareil,
la fig. 2 est une vue en plan de dessus à échelle agrandie des moyens de transfert dans une forme d'exécution préférée de l'objet de l'invention,
la fig. 3 est une vue en élévation des moyens de transfert dans le sens de la flèche 3 à la fig. 2,
la fig. 4 est une vue en coupe selon la ligne IV-IV de la fig. 3,
la fig. 5 est une vue semblable à la fig. 1 montrant en outre les moyens d'élimination des feuilles intercalaires,
la fig. 6 est une vue en élévation schématique de l'appareil avec les moyens d'élimination des feuilles intercalaires,
la fig. 7 est une vue en plan de dessus, des moyens d'élimination des feuilles intercalaires et
la fig. 8 est une vue en élévation partielle d'une butée escamotable.

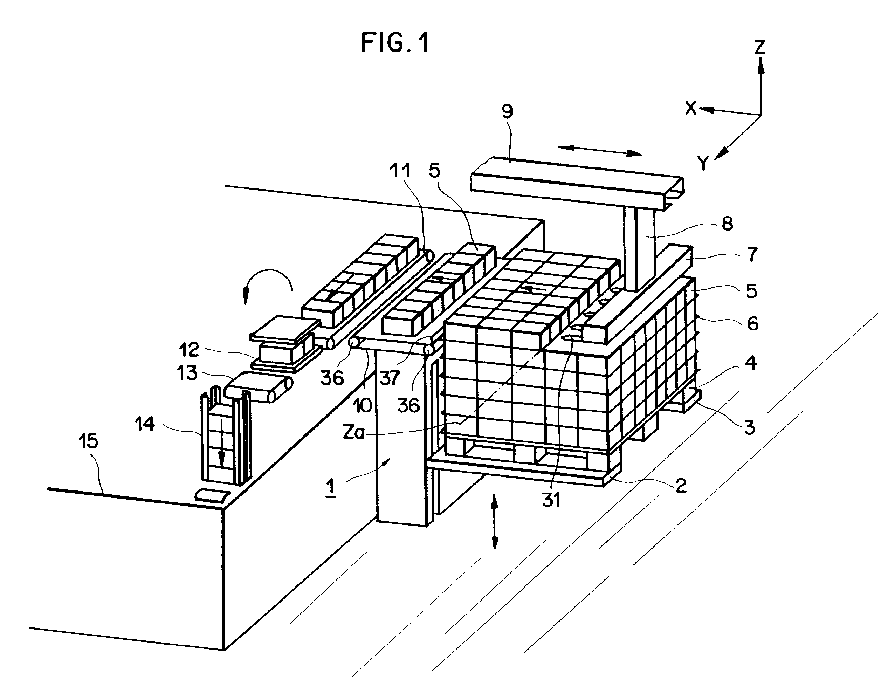

Les éléments principaux de l'appareil sont visibles à la fig. 1. Un socle vertical 1 comporte des moyens élévateurs (non représentés) dont font saillie deux bras élévateurs 2 et 3 qui s'étendent parallèlement l'un à l'autre dans une direction X définie par un trièdre trirectangle X, Y, Z qui sera adopté dans cette description pour situer les différents mouvements et les orientations des différents éléments de l'appareil décrit. Les deux bras élévateurs 2 et 3 s'étendent horizontalement et sont agencés de façon à pouvoir recevoir directement de l'appareil de transport une palette 4 de type standard chargée d'objets 5 disposés en couches superposées formées elles-mêmes de rangées alignées et parallèles. Chacun des objets 5 est un empilage d'étiquettes comprenant, par exemple, 250 étiquettes ayant un format de l'ordre de 120/250 mm. Le chargement de la palette 4 comporte en outre des feuilles intercalaires 6 qui sont des feuilles de carton disposées entre chacune des couches d'objets 5. Une fois que la palette 4 chargée a été amenée sur l'élévateur 2,3, un dispositif de commande (non représenté) permet de l'élever pas à pas, chaque pas comportant un déplacement dans le sens Z vers le haut d'une hauteur correspondant à la hauteur de l'empilage 5 et de l'épaisseur d'une feuille intercalaire 6. Chaque couche peut ainsi être amenée à un niveau Za auquel agissent des moyens de transfert 7 qui sont accrochés à un chariot 8 mobile horizontalement sur un rail de guidage 9 disposé dans la partie supérieure de l'appareil et orienté dans le sens de la direction X. Les moyens de transfert 7 sont agencés de façon à pouvoir saisir l'ensemble d'une rangée d'objets dans la couche supérieure de l'empilage et à transporter cette rangée sur un transporteur d'évacuation 10 qui est installé au-dessus du bâti 1. Par ce transfert, chaque rangée est donc extraite de la couche dont elle fait partie et séparée des autres rangées de cette couche. Cette rangée ainsi séparée est déplacée dans la direction X, de façon à parvenir sur une piste 11 allant vers la station d'entrée. Le transporteur 10 peut, le cas échéant, être équipé d'un dispositif de renversement, connu en soi, capable de faire tourner l'ensemble des paquets 5 d'une rangée de 180° autour d'un axe parallèle à la rangée. Ainsi, le bord arrière des étiquettes se trouve, après cette opération, en avant dans le sens du déplacement X. Suivant la dispositif de l'empaqueteuse et la position de l'appareil décrit par rapport à elle, cette opération peut être nécessaire. La piste 11 est également un transporteur secondaire à bande sans fin. Sa largeur correspond à la longueur des étiquettes et sa longueur correspond à la longueur de chacune des rangées du chargement de la palette 4. Ce transporteur 11 entraîne les paquets 5 dans le sens Y et, à son extrémité, ceux-ci sont séparés les uns des autres. Le cas échéant, comme on le voit à la fig. 1, un dispositif de renversement 12 peut être placé à l'extrémité de la piste d'amenée 11. Dans ce cas, le dispositif de renversement se charge de deux objets 5 en même temps, puis les renverse autour d'un axe orienté dans la direction X de 180° afin de les amener sur un transporteur d'entrée 13 qui est encore une bande sans fin montée sur deux galets. De là, chaque objet 5 est transféré dans une coulisse 14 qui constitue la station d'entrée à l'empaqueteuse désignée de façon générale par 15 et dont la description ne fait pas partie de la présente invention.

L'appareil décrit comporte encore des moyens pour éliminer chacune des feuilles intercalaires 6 au moment où l'ensemble de la couche d'objets 5, placé au-dessus de cette feuille, a été entièrement transféré par les moyens de transfert 7 sur le transporteur 10. Le rail de guidage 9 guide un socle mobile 8 portant l'ensemble des moyens 7. Le dispositif, représenté à la fig. 1, peut être logé à l'intérieur d'une superstructure en forme de tunnel, abritant les moteurs, ainsi que le circuit de commande, de telle sorte que l'entrée de ce tunnel est accessible pour un engin de transport amenant les palettes, avec une précision plus ou moins grande, sur les deux bras élévateurs 2, 3.

L'ensemble des moyens moteurs et des moyens de commande, associé à l'appareil, fonctionne sous le contrôle de détecteurs, notamment de détecteurs de position, afin de permettre d'ajuster, au fur et à mesure et en fonction des besoins, tous les paramètres de commande des différents organes mobiles. Ainsi, le même appareil peut être ajusté de cas en cas, de façon à traiter des chargements d'étiquettes de différents formats. Des détecteurs d'anomalies de fonctionnement sont également prévus pour stopper le fonctionnement en cas de fausse manoeuvre ou de détérioration d'un objet. Les moyens nécessaires sont également prévus pour ajuster automatiquement le fonctionnement de l'appareil selon la plus ou moins grande précision avec laquelle les palettes sont mises en place sur l'élévateur 2,3.

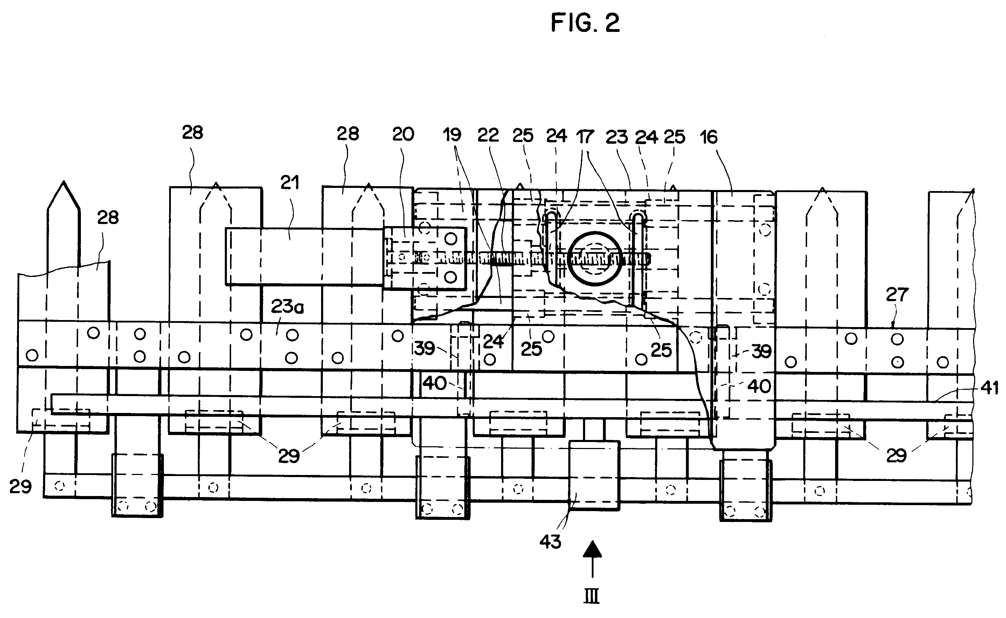

On va maintenant décrire plus en détail, en se référant aux fig. 2, 3 et 4, la constitution des moyens de transfert 7 dans la forme d'exécution représentée à la fig. 1.

Le chariot 8 comporte principalement un montant vertical qui est relié à un châssis muni de galets (non représentés) se déplaçant à l'intérieur du rail 9. Un moteur d'entraînement et ses moyens de commande associés entraînent le chariot 8 dans le rail 9 et commandent les déplacements prévus dans le sens X au fur et à mesure du fonctionnement de l'installation. Le montant 8 du chariot porte à son extrémité inférieure une plaque de support 16 (fig. 2, 3, 4) de forme rectangulaire qui est articulée autour d'un axe vertical par rapport au montant 8. L'articulation 53 de la plaque 16 est supportée par une plaque homologue qui est fixée au montant 8 par deux ouvertures allongées et parallèles 17 orientées selon l'axe X. Ces ouvertures servent de moyens de fixation du dispositif de transfert à l'extrémité inférieure du montant du chariot 8 et permettent donc d'ajuster dans le sens X la position des moyens de transfert par rapport au chariot 8. La plaque rectangulaire 16 est solidaire à ses deux extrémités de deux plaques latérales 18 qui supportent entre elles deux tiges de guidage parallèles 19 disposées horizontalement dans le sens Y. A la plaque 16 est égale ment fixée une cornière 20 qui supporte le stator et le boîtier d'un moteur électrique 21 capable d'entraîner en rotation une tige filetée 22 s'étendant horizontalement entre les tiges de guidage 19. Le montage du moteur sur la cornière 20 et la liaison entre ce moteur et la tige 22 sont des mécanismes classiques qui n'ont pas besoin d'être décrits en détail.

Les moyens de transfert proprement dits, désignés par 7, comportent une armature 27 avec un bloc d'entraînement 23 percé de trois forures parallèles horizontales, désignées par 24 (fig. 2). Deux de ces forures sont équipées de coulisses de guidage 25 et guident les déplacements de l'ensemble de l'armature 27 le long des barres 19. La troisième forure 24, disposée entre les deux premières, est équipée d'un écrou 26 que traverse la tige filetée 22, de sorte que le moteur 21 sert à actionner le bloc 23, afin de permettre un déplacement de l'armature 27 dans le sens Y, et d'ajuster sa position. Le bloc 23 est solidaire d'une barre de support 23a qui s'étend horizontalement dans le sens Y sur une longueur égale à celle des rangées d'objets 5. Sous cette barre sont fixées, de distance en distance, des plaquettes d'appui 28 qui s'étendent horizontalement dans la direction X et qui ont un espacement fixe correspondant à la largeur des objets à transférer. Ainsi, chaque plaquette d'appui 28 peut venir s'engager sur un empilage d'étiquettes 5, de façon à l'assujettir aux moyens de transfert 7 lors de la manipulation des griffes, comme on le verra plus loin.

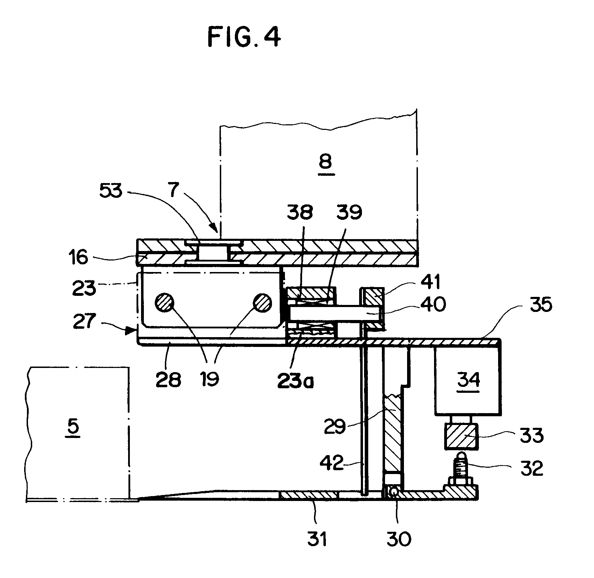

A l'extrémité arrière, dans la direction X de chacune des plaquettes d'appui 28, est fixé un montant de griffe qui s'étend verticalement vers le bas et qui est désigné par 29. A son extrémité inférieure, ce montant 29 présente la forme d'un étrier et porte un axe d'articulation 30, orienté dans le sens Y, et servant d'articulation à une griffe 31 qui s'étend horizontalement dans le sens X sous la plaquette d'appui 28. Cette griffe 31 se prolonge vers l'arrière et porte une butée de commande 32 qui est ajustable en hauteur et qui est destinée à être actionnée par une barre rigide 33 également disposée horizontalement dans la direction Y et s'étendant sur toute la longueur des rangées d'objets 5. Cette barre 33 est portée par les tiges de quatre vérins 34 dont les cylindres sont solidaires de plaquettes de fixation 35, fixées également à la barre 23a entre certaines des plaques d'appui 28. Au moyen de ces quatre vérins, il est possible de commander un déplacement vertical de la barre de commande 33 qui actionne les butées 32 des griffes 31 et les fait pivoter à volonté. Des ressorts antagonistes (non représentés) peuvent être prévus. Comme on le voit à la fig. 4, les moyens de transfert 7 peuvent donc saisir simultanément l'ensemble des empilages 5 d'une rangée d'empilages par un simple déplacement du chariot 8 dans la direction X et par la manoeuvre des vérins 34.

Les pointes des griffes 31 seront amenées au préalable dans des positions telles qu'elles se trouvent exactement au niveau de la feuille intercalaire 6 sur laquelle la rangée à emporter se trouve et au pied d'un empilage d'étiquettes, dans le centre du bord arrière des étiquettes. De là, un déplacement du chariot dans le sens X engage les pointes des griffes chacune sous l'un des empilages, après quoi, la manoeuvre des vérins 34 amène chaque griffe 31 à pivoter vers le haut et, par conséquent, à appuyer l'empilage d'étiquettes sous lequel elle se trouve contre la plaque d'appui 28 qui se trouve immédiatement au-dessus. Par cette manoeuvre, l'ensemble d'une rangée de paquets d'étiquettes est assujetti rigidement au moyen de transfert en une opération. Le déplacement du chariot 8 permet d'a mener l'ensemble de la rangée de paquets d'étiquettes au-dessus du transporteur 10. Ce transporteur est constitué par une bande sans fin montée sur des galets 36 orientés dans le sens Y. La largeur du transporteur est égale à la longueur d'une rangée et la distance sur laquelle il peut déplacer une rangée correspond à la largeur du bâti 1 et à la distance entre l'élévateur supportant la palette 4 et la piste d'entrée qui a été décrite précédemment et qui est désignée par 11. Ainsi, les moyens de transfert 7 peuvent, lorsqu'ils sont parvenus au-dessus du transporteur 10, effectuer la manoeuvre inverse de celle qui a été décrite précédemment.

La pratique a montré que l'opération consistant à engager les griffes 31 simultanément sous les différents paquets d'étiquettes 5 d'une rangée nécessitait, pour se dérouler d'une façon fiable, des contrôles et des mouvements de préparation assez précis. On a donc prévu, dans ce but, un certain nombre de dispositifs auxiliaires qui vont être décrits maintenant. Le premier dispositif auxiliaire est une commande du moteur 21, au moyen de capteurs capables de repérer la position des griffes 31, dans la direction Y par rapport aux différents objets (empilages 5) à transporter. L'armature 27 est déplacée dans le sens Y jusqu'à ce que chaque griffe 31 se trouve exactement en regard du milieu du bord inférieur d'un empilage.

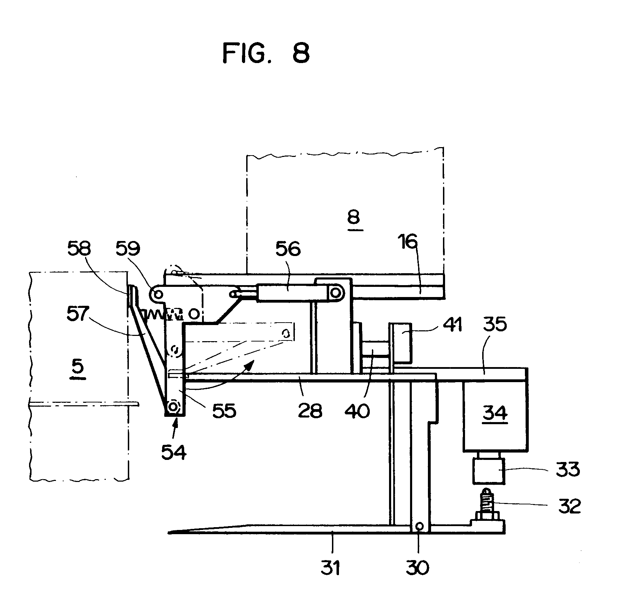

Un autre dispositif auxiliaire est constitué par l'articulation 53 qui permet à l'armature 27 de pivoter autour d'un axe vertical par rapport au chariot 8. A ce dispositif sont adjointes des butées 54 qui équipent chacune des deux plaques 28 situées aux deux extrémités de l'armature 27 (fig. 8). Chaque dispositif de butée 54 comporte un levier 55, actionné par un vérin 56 et articulé autour d'un axe horizontal un peu au-dessus de la plaque 28. A ce levier, est reliée une lame élastique 57 qui porte un plot de butée 58. A la hauteur de ce plot de butée et au-dessus du support de l'axe d'articulation du levier 55 est situé un détecteur 59.

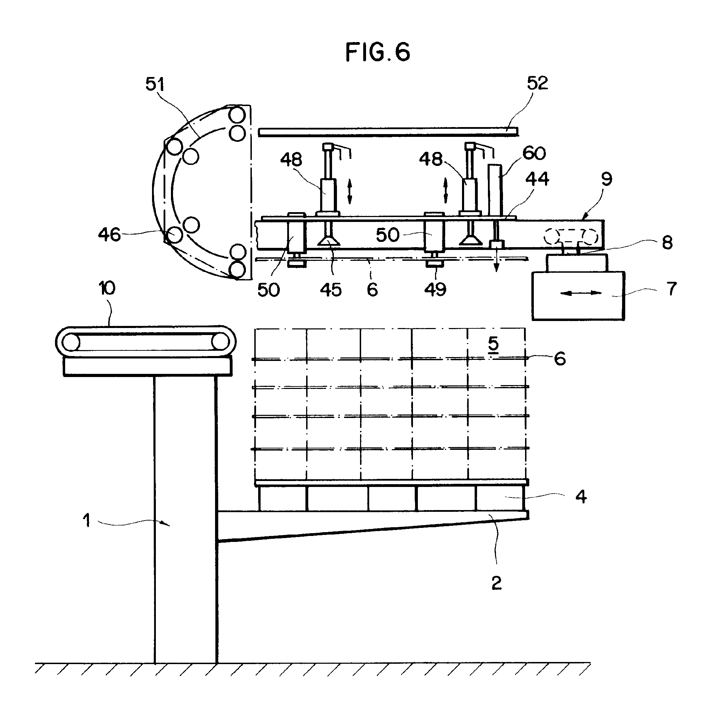

Normalement, le dispositif de butée 54 se trouve dans une position effacée, la tige du vérin 56 étant déplacée vers l'avant afin que le levier 55 se trouve en position horizontale. Toutefois, au moment de la mise en place des griffes 31, l'opération qu'il s'agit d'effectuer est d'aligner la rangée des griffes 31 sur le bord postérieur de la rangée de paquets d'étiquettes à soulever et de centrer l'ensemble des griffes 31 par rapport à la position exacte de la rangée de paquets d'étiquettes. Ainsi donc, au début de l'opération de transfert d'une couche intervient une opération d'alignement et de centrage des moyens de transfert 7. Les butées 54 sont amenées en position verticale. L'élévateur place l'empilage de paquets d'étiquettes à une hauteur telle que la face arrière des empilages de la première rangée de la couche supérieure se trouve en regard des plots 58, et un déplacement du chariot vers l'avant a lieu. Ce mouvement est contrôlé, pour la saisie de la première rangée d'une couche, par un capteur placé sur le rail. Au moment où les plots 58 sont amenés en contact avec les faces arrière des empilages et provoquent un cintrage des lamelles 57, ils viennent obturer l'espace situé devant les détecteurs 59. On se rend compte que cette opération a pour effet d'aligner l'armature 27 par rapport au bord postérieur de la rangée d'étiquettes qui pourrait ne pas être exactement parallèle à la direction Y. D'ailleurs, pour éviter tout risque de déformation des paquets d'étiquettes situés aux extrémités de la rangée au moment du pivotement de la barre 27 autour de l'articulation 53, il est prévu encore des vérins de blocage 60(fig. 6) qui, pendant l'opération d'alignement, vont s'abaisser et pressent sur la face supérieure des deux paquets d'étiquettes situés aux extrémités de la rangée. Lorsque cette opération a été effectuée, les pointes de griffes se trouvent à quelques millimètres de la face frontale postérieure des paquets d'étiquettes de la rangée, et comme l'opération de centrage décrite plus haut a été effectuée au préalable par commande du moteur 21 et déplacement du bloc 23, sous les indications d'un capteur (non représenté) qui détecte la position exacte d'un des flancs latéraux de l'empilage des étiquettes, les pointes de griffes sont positionnées pour saisir chacune un des paquets d'étiquettes. La palette est abaissée afin de permettre le renversement des butées 54 et leur mise à l'écart, puis la palette remonte d'un nouvement contrôlé jusqu'à ce que les pointes des griffes 31 soient appuyées sur le bord postérieur proéminent de la feuille de carton intercalaire 6 qui soutient la rangée de paquets d'étiquettes à éliminer.

Ensuite, un mouvement d'avance dans la direction X sera commandé, de telle manière que toutes les griffes s'engagent chacune sous un des paquets d'étiquettes et les opérations décrites plus haut pourront se dérouler, c'est-à-dire que l'ensemble des empilages 5 d'une rangée sera saisi en même temps. Une fois que la palette aura été abaissée, le dispositif de centrage entrera à nouveau en fonction pour positionner la rangée par rapport au transporteur 10 et le dépôt de la rangée sur ce transporteur pourra se faire.

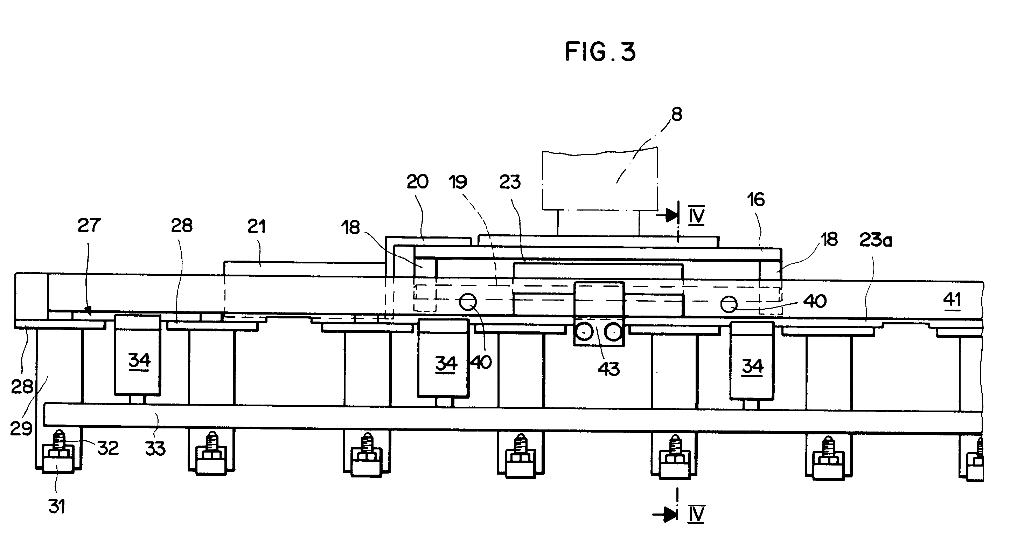

Pour déposer sûrement les paquets 5 sur le transporteur 10, les moyens de transfert décrits comportent encore un éjecteur. En deux emplacements de sa longueur, la barre 27, qui constitue l'armature des moyens de transfert et qui est solidaire du bloc 23, présente une forure 38 (fig. 2 et 3) équipée d'une coulisse 39. Dans chacune de ces coulisses 39 se déplace une barre d'ajustage 40 (fig. 4) à l'extrémité arrière de laquelle est fixée une baguette 41 placée longitudinalement dans le sens Y. Cette baguette 41 porte, en regard de chaque montant 29, une tige verticale 42. Elle est commandée par un vérin 43 (fig. 2) dont le cylindre est fixé à la barre centrale de l'armature des moyens de transfert et dont la tige est solidaire de la baguette 41. La commande de ce vérin, quand les moyens de transfert 7 se trouvent en-dessus du transporteur 10, permet de pousser les paquets 5 de façon qu'ils se dégagent des griffes 31. En même temps, les griffes sont abaissées et le chariot 8 est reculé, de sorte que les empilages d'étiquettes 5 sont déposés simultanément sur le transporteur 10. De là, cette rangée est immédiatement transférée sur la piste 11 et les opérations déjà décrites précédemment peuvent se dérouler. Pendant ce temps, le chariot 8 revient prendre sa position initiale et, par conséquent, est capable de saisir la rangée suivante de la couche qui se trouve au niveau Za. Pour faciliter ces opérations, l'élévateur 2,3 est également manoeuvré à l'élévation et à l'abaissement, afin de présenter une nouvelle rangée devant les griffes 31 ou, au contraire, libérer la place pour permettre l'avancement du chariot 8. Une butée longitudinale 37, qui se trouve au niveau de la feuille intercalaire 6 lorsque la couche est dans sa position de déchargement, a pour fonction d'empêcher un déplacement longitudinal de la feuille intercalaire au moment où les griffes saisissent une rangée de paquets d'étiquettes. Cette fonction est importante, surtout lorsque le nombre des rangées encore disposées sur la palette est faible et, en particulier, lors de la saisie de la dernière rangée. Il est important en effet que, lors de cette opération, la feuille intercalaire 6 ne se déplace pas. La butée 37 est mobile verticalement, de manière à s'effacer pour permettre le passage du chariot 8.

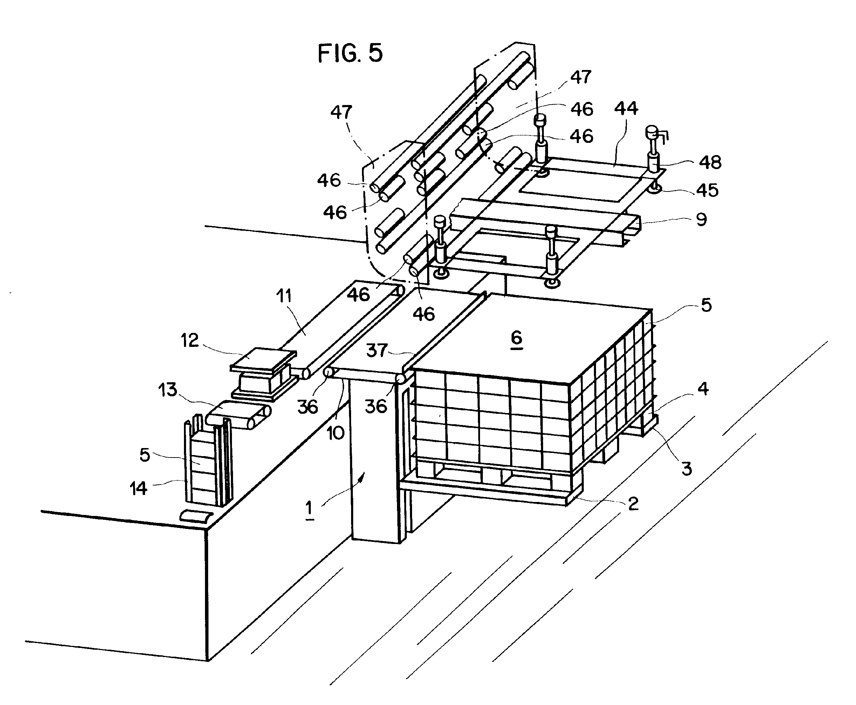

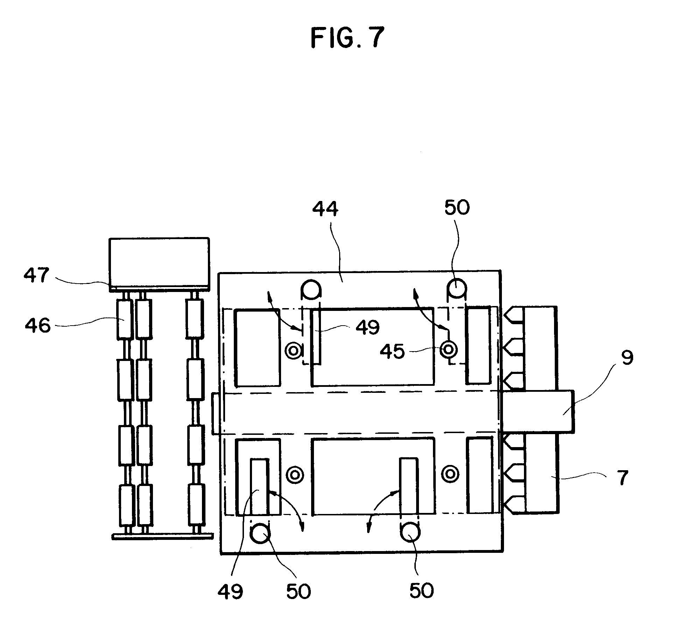

Il reste à décrire les moyens permettant d'éliminer automatiquement la feuille intercalaire 6, lorsqu'une couche d'objets 5 a été entièrement déchargée. Ces moyens d'élimination sont visibles schématiquement aux fig. 5, 6 et 7. On voit que le rail 9 a une longueur telle que le chariot 8 peut être entièrement escamoté vers la droite, ce qui permet à l'élévateur 2,3 de coopérer avec des moyens d'élimination qui sont également supportés et guidés par le rail 9. Ces moyens d'élimination consistent en un cadre 44 qui est fixe et porte des ventouses 45 associées à des vérins 48. Les moyens de liaison entre les ventouses 45 et une source d'aspiration ne sont pas représentés. Ce sont des moyens classiques. Lorsqu'une couche de paquets d'étiquettes 5 a été entièrement enlevée, la palette 4 est élevée, de façon que la feuille intercalaire 6 soit saisie par les ventouses 45 qui ont été abaissées par manoeuvre des vérins 48. Une fois que la feuille 6 est fixée aux ventouses 45, la palette est abaissée par manoeuvre de l'élévateur 2,3 et des lattes de support 49, disposées horizontalement sous le cadre 44 et capables de tourner autour d'axes verticaux sur des dispositifs à vérins tournants 50, sont déplacées entre une position de retrait et la position visible à la fig. 7, après quoi, les ventouses 45 sont abaissées et déposent la feuille 6 sur les lattes 49. A ce moment, le chariot 8 est avancé, de manière que le bord antérieur du bloc 23 pousse la feuille 6 jusqu'à ce que le bord antérieur de cette dernière soit pris entre les galets 46. Ces galets sont disposés en plusieurs séries et sont entraînés par un moteur. Leurs axes sont supportés par des tôles d'encadrement 47 servant également au guidage de la feuille. Ces tôles d'encadrement 47 supportent plusieurs séries de galets 46, ainsi que les engrenages nécessaires pour l'entraînement des galets à partir d'un moteur. Lorsque le bord antérieur de la feuille 6 a été saisi entre les deux séries de galets du premier ensemble d'entraînement, cette feuille est déplacée et guidée par une tôle intérieure 51 cintrée en arc de cercle, qui guide la feuille et l'engage successivement entre les différentes séries de galets 46 jusqu'à ce qu'elle ait effectué un demi-tour autour d'un axe horizontal orienté dans la direction Y et vienne se placer sur un râtelier horizontal 52 placé au-dessus du rail 9. Par ce moyen, la récupération des différentes feuilles intercalaires peut se dérouler automatiquement et, par conséquent, l'ensemble des opérations de déchargement d'une palette complète peut se dérouler sans aucune intervention humaine.

Ainsi, le but de l'invention est atteint par l'appareil tel que décrit ci-dessus.

La réalisation d'une combinaison de moyens susceptible de fonctionner de façon fiable et automatiquement, afin d'effectuer toutes ces opérations, n'était pas évident. Les recherches ont montré que la solution désirée était possible pratiquement au moins avec les moyens de transfert décrits ci-dessus, mais il reste que d'autres moyens de transfert peuvent également être envisagés le cas échéant.

Ainsi, notamment, les modifications qui peuvent être prévues, à titre d'option, avec l'appareil tel que décrit, consistent à remplacer les griffes 31 s'engageant chacune sous l'un des paquets d'étiquettes par des paires de griffes également susceptibles d'être montées sur les axes 30 et permettant d'engager sous chaque paquet d'étiquettes 5 deux griffes parallèles, assurant, par conséquent, une meilleure préhension du paquet. Cet agencement peut être prévu en variante sur l'appareil, afin d'être mis en place en fonction des différences de formats des étiquettes à transférer.

Cependant, on peut également concevoir les moyens de transfert d'une façon totalement différente, et cela sous la forme d'une série de poussoirs verticaux correspondant chacun à un des paquets d'une rangée. Ces poussoirs pourraient être munis à leur extrémité inférieure d'un racloir agencé de façon à suivre étroitement la surface supérieure de la feuille intercalaire 6. Chaque poussoir serait associé à un galet roulant et pressant sur la feuille 6. Le chariot de transfert, auquel cet ensemble de poussoirs serait associé, pourrait donc déplacer dans la direction X l'ensemble des rangées de la couche transférée, les rangées se poussant l'une l'autre, de sorte que, contrairement à ce qui a été décrit précédemment, ce serait la rangée située à l'avant, dans le sens X, qui serait transférée sur le transporteur 10, les autres rangées étant transférées successivement dans le même ordre. Dans ce cas, la butée de retenue de la feuille intercalaire devrait plutôt se trouver en regard du bord arrière de cette feuille, mais non pas en regard du bord avant comme représenté à la fig. 1. Pour certains types d'objets, cette disposition pourrait être plus favorable que celle qui a été décrite. Il semble toutefois que la disposition décrite présente l'avantage d'être d'une utilisation universelle.

On notera que l'appareil décrit peut transférer une rangée d'objets même si certains objets font défaut, sans modifier l'agencement de la rangée.

## Revendications

1. Appareil dépalettiseur automatique, capable de déplacer des piles d'étiquettes disposées en couches superposées et formées de rangées parallèles et adjacentes, sur une palette, et de les amener une à une dans une station d'entrée d'une machine, comportant des moyens élévateurs (1, 2, 3) pour élever la palette (4) pas à pas et amener les couches à une hauteur prédéterminée Za, des moyens de transfert (7) mobiles dans une direction horizontale X, un transporteur d'évacuation (10) également mobile dans la dite direction X et des moyens (11) de distribution des piles d'étiquettes dans la dite station d'entrée (14), caractérisé en ce que les moyens de transfert (7) comportent un équipement (27, 31, 28, 34) de transfert comportant un ensemble de pinces (28, 31) orientées dans la direction X et alignées selon la direction Y horizontale et perpendiculaire à la direction X, capable de mouvoir en une opération une pluralité de piles d'étiquettes disposées côte à côte dans une rangée, cette rangée étant orientée dans ladite direction Y de déplacement des moyens de transfert, et de placer la dite pluralité de piles d'étiquettes de la rangée sur le transporteur d'évacuation (10) après un déplacement en translation.

2. Appareil selon la revendication 1, caractérisé en ce que le transporteur d'évacuation (10) étant mobile dans la dite direction X de déplacement des moyens de transfert (7), les moyens de distribution consistent en un transporteur secondaire qui est mobile dans la dite direction Y d'orientation des rangées et sur lequel parvient en une fois l'ensemble des piles d'étiquettes d'une rangée, déplacée par le transporteur d'évacuation (10) en fin de parcours de ce dernier.

3. Appareil selon la revendication 1, caractérisé en ce qu'il comporte en outre des moyens d'élimination (45,46) de feuilles intercalaires situées entre les couches.

4. Appareil selon les revendications 2 et 3, caractérisé en ce que les dits moyens de transfert (7) sont escamotables pour permettre d'amener la palette (4) périodiquement à un niveau Z1, supérieur à Z, et tel qu'une feuille intercalaire (6) recouvrant librement une couche pleine se trouve dans la zone d'action de moyens de préhension auxiliaires (45) faisant partie des moyens d'élimination des feuilles intercalaires.

5. Appareil selon'la revendication 2, caractérisé en ce que l'ensemble de pinces (28,31) est monté sous un chariot (8) de support des moyens de transfert (7) et chacune des pinces est capable de pincer une des piles d'étiquettes d'une rangée à transférer, de manière à permettre son transfert sur le transporteur d'évacuation (10) par déplacement du chariot (8).

6. Appareil selon la revendication 5, caractérisé en ce que le chariot (8) porte un socle (16), une armature (27) ajustable dans le sens Y, par rapport au socle (16), une série de griffes (31) parallèles à la direction X articulées sur l'armature autour d'un même axe (30) parallèle à la direction Y et une commande à vérins (34) solidaire de l'armature et capable d'actionner les griffes simultanément pour les faire pivoter autour de leur axe commun.

7. Appareil selon la revendication 6, caractérisé par un éjecteur (40, 41, 42) capable de modifier la profondeur d'engagement des griffes (31) sous les piles d'étiquettes d'une même rangée, cet éjecteur comportant des butées verticales (42) reliées à un ensemble de commande mobile dans la direction X.

8. Appareil selon la revendication 6, caractérisé en ce que le socle (16) est orientable par rapport au chariot (8) autour d'une articulation (53) à axe vertical et en ce que des moyens d'ajustage (21, 23;54) sont prévus d'une part entre le socle (16) et l'armature (27) supportant les griffes (31), et d'autre part aux deux extrémités de la dite armature (27), ces moyens d'ajustage coopérant avec des capteurs pour placer la rangée des griffes (31) dans une position parallèle à la rangée des piles d'étiquettes à saisir et chaque griffe (31) dans une position prédéterminée par rapport à une pile d'étiquettes de la dite rangée, avant une opération de transfert.

9. Appareil selon la revendication 2, caractérisé en ce que le transporteur d'évacuation et le transporteur secondaire sont des transporteurs à bande sans fin, dont les brins supérieurs des bandes sont horizontaux et au même niveau, la largeur du transporteur d'évacuation correspondant à la longueur d'une rangée tandis que celle du transporteur secondaire correspond à la dimension dans le sens transversal X d'une pile d'étiquettes.

## Patentansprüche

1. Vorrichtung zum automatischen Entpalettisieren, mit welcher Etikettenstapel, die in übereinanderliegenden Lagen in parallelen und anliegenden Reihen auf einer Palette angeordnet sind, verschiebbar und einer nach dem andern in eine Eingangsstation einer Maschine zuführbar sind, welche Vorrichtung Hebemittel (1, 2, 3) zum schrittweisen Anheben der Palette (4) und zum Zuführen der Stapel auf eine vorbestimmte Höhe Za, Ueberführmittel (7), welche in einer horizontalen Richtung X verfahrbar sind, einen Entleerförderer (10), welcher ebenfalls in der genannten Richtung X verfahrbar ist, und Mittel (11) zur Zuführung der Etikettenstapel in die genannte Eingangsstation (14) umfasst, dadurch gekennzeichnet, dass die Ueberführmittel (7) eine Ueberführeinrichtung (27, 31, 28, 34) enthält, die mit einem Satz von Greifern (28, 31) versehen ist, welche in Richtung X ausgerichtet und in Reihe nebeneinander in Richtung Y sowie horizontal und rechtwinklig zur Richtung X angeordnet sind, und welche fähig sind, in einem Vorgang eine Anzahl von Etikettenstapel, die Seite an Seite in einer Reihe angeordnet sind, wobei diese Reihe in der genannten Richtung Y der Anordnung der Ueberführmittel ausgerichtet ist, zu bewegen und diese genannte Anzahl von Etikettenstapel der Reihe nach einer Verschiebung auf den Entleerförderer (10) zu bringen.

2. Vorrichtung nach Anspruch 1, dadurch gekennzeichnet, dass der Entleerförderer (10) in der genannten Richtung X der Verschiebung der Ueberführmittel (7) bewegbar ist, und die Mittel zur Zuführung aus einem zweiten Förderer bestehen, der in der genannten Richtung Y der Ausrichtung der Reihen bewegbar ist, und auf welchen in einem Mal die Anzahl der Etikettenstapel einer Reihe gelangen, verschoben durch den Entleerförderer (10) am Ende des Weges des letzteren.

3. Vorrichtung nach Anspruch 1, dadurch gekennzeichnet, dass ferner Mittel (45, 46) zur Beseitigung der eingeschobenen Blätter, die zwischen den Lagen angeordnet sind, vorgesehen sind.

4. Vorrichtung nach einem der Ansprüche 2 oder 3, dadurch gekennzeichnet, dass die genannten Ueberführmittel (7) einziehbar sind, um zu erlauben, dass die Palette (4) periodisch auf eine Höhe Z1 führbar ist, die oberhalb von Z liegt, sodass ein eingeschobenes Blatt (6), welches eine volle Lage frei überdeckt, sich im Wirkungsbereich der Greifhilfsmittel (45) befindet, die zu den Mitteln zur Beseitigung der eingeschobenen Blätter gehören.

5. Vorrichtung nach Anspruch 2, dadurch gekennzeichnet, dass der Satz von Greifern (28, 31) unter einem Gestell (8) angebracht ist, welches die Ueberführmittel (7) trägt, wobei jeder der Greifer einen der Etikettenstapel einer zu überführenden Reihe greifen kann, sodass die Ueberführung auf den Entleerförderer (10) durch Verfahren des Gestells (8) erfolgt.

6. Vorrichtung nach Anspruch 5, dadurch gekennzeichnet, dass das Gestell (8) eine Grundplatte (16), eine in Richtung Y hinsichtlich der Grundplatte einstellbare Armatur, eine Serie von Greifern (31), die zur Richtung X parallel und auf der Armatur um eine gleiche Achse (30), die parallel zur Richtung Y ist, schwenkbar sind, und einen Stellantrieb (34), der mit der Armatur verbunden ist, und der fähig ist, die Greifer simultan so zu betätigen, dass sie um ihre gemeinsame Achse schwenken, trägt.

7. Vorrichtung nach Anspruch 6, dadurch gekennzeichnet, dass ein Auswerfer (40, 41, 42) vorgesehen ist, mit welchem die Eingreiftiefe der Greifer (31) unter die Etikettenstapel einer gleichen Reihe veränderbar ist, wobei dieser Auswerfer vertikale Anschläge aufweist, die mit einem in Richtung X bewegbaren Antrieb verbunden sind.

8. Vorrichtung nach Anspruch 6, dadurch gekennzeichnet, dass die Grundplatte (16) hinsichtlich des Gestells (8) um ein Gelenk (53) mit vertikaler Schwenkachse ausrichtbar ist, und dass Justiermittel (21, 23; 54) vorgesehen sind, die einesteils zwischen der Grundplatte (16) und der Armatur (27) die Greifer (31) tragen, und wobei andererseits an den beiden Endbereichen der genannten Armatur (27) diese Justiermittel mit Fühlern zusammenwirken, um die Reihe der Greifer (31) in eine zu der Reihe der zu ergreifenden Etikettenstapel parallele Lage und jeden Greifer (31) in eine vorbestimmte Lage hinsichtlich eines Etikettenstapels der genannten Reihe zu bringen, bevor ein Ueberführvorgang stattfindet.

9. Vorrichtung nach Anspruch 2, dadurch gekennzeichnet, dass der Entleerförderer und der zweite Förderer endlose Bandförderer sind, deren obere Trume der Bänder horizontal und auf gleicher Höhe sind, und dass die Breite des Entleerungsförderers der Länge einer Reihe entspricht, während diejenige des zweiten Förderers der Abmessung eines Etikettenstapels in Querrichtung X entspricht.

## Claims

1. Automatic depalletizing apparatus capable of moving piles of labels, disposed in superimposed layers and formed of parallel and adjacent rows, on a pallet, and of bringing them one by one to an entry station of a machine, having lifting means (1, 2, 3) for lifting the pallet (4) step by step and conveying the layers to a predetermined level (Za), transfer means (7) movable in a horizontal direction X, a discharge conveyor (10) likewise movable in said direction X and means (11) of distribution of the piles of labels in said entry station (14), characterized in that the transfer means (7) include a transfer facility (27, 31, 28, 34) comprised of a set of pincers (28, 31) oriented in direction X and aligned according to direction Y, horizontal and perpendicular to direction X, capable of moving in one operation a plura- lity of piles of labels disposed side by side into a row, this row being oriented in said direction Y of displacement of the transfer means, and of placing said plurality of piles of labels in the row on the discharge conveyor (10) after a translatory movement.

2. Apparatus according to claim 1, characterized in that the discharge conveyor (10) is movable in said direction X of displacement of the means of transfer (7), the means of distribution comprising a second conveyor movable in said direction Y of orientation of rows and by which achieving at one time the collection of the piles of labels in a row, moved by the discharge conveyor (10) at the end of the journey of the latter.

3. Apparatus according to claim 1, characterized in that it comprises another means (45, 46) for eliminating the inserted sheets located between the layers.

4. Apparatus according to claims 2 and 3, characterized in that said means of transfer (7) are movable to permit bringing the pallet (4) periodically to a level Z1, higher than Z <sic. Za>, and so that an inserted sheet (6), freely overlapping a full layer, is situated in the zone of action of auxiliary seizing means (45) being part of the means of elimination of the inserted sheets.

5. Apparatus according to claim 2, characterized in that the set of pincers (28, 31) is mounted on a carriage (8) supporting the transfer means (7) and each is capable of grasping one of the piles of labels in a row to be transferred in a manner permitting its transfer on the discharge conveyor (10) by movement of the carriage (8).

6. Apparatus according to claim 5, characterized in that the carriage (8) includes a pedestal (16), a truss (27) adjustable in direction Y relative to the pedestal, a series of claws (31), parallel to direction X, pivoted on the truss about a single axis (30) parallel to direction Y, and a jack-type control (34) integral with said truss and capable of causing said claws to pivot simultaneously about their common axis.

7. Apparatus according to claim 6, characterized by an ejector (40', 41, 42) capable of modifying the depth of engagement of the claws (31) under the piles of labels in a single row, said ejector including vertical stops (42) connected to a control assembly movable in direction X.

8. Apparatus according to claim 6, characterized in that the pedestal (16) can be oriented relative to the carriage (8) about a vertical axis joint (53) and in that the adjustment means (21, 23; 54) are foreseen, on the one hand, between the pedestal (16) and the truss (27) supporting the claws (31), and, on the other hand, on the two ends of said truss (27), the adjustment means cooperating with the sensors for placing the row of claws in a position parallel to the row of piles of labels to be grasped and each claw (31) in a predetermined position relative to a pile of labels of said row, prior to a transfer operation.

9. Apparatus according to claim 2, characterized in that the discharge conveyor and the secondary conveyor are endless-belt conveyors having horizontal upper belt lengths at the same level, the width of said discharge conveyor corresponding to the length of a row, whereas the width of the secondary conveyor corresponds to the dimension in the transverse direction X of a pile of labels.
